**Europäisches Patentamt**

**European Patent Office**

**Office européen des brevets**

(11) Veröffentlichungsnummer: **0 130 373**
**A2**

(12) # EUROPÄISCHE PATENTANMELDUNG

(21) Anmeldenummer: **84106166.6**

(22) Anmeldetag: **30.05.84**

(51) Int. Cl.⁴: **B 23 P 6/00**

(30) Priorität: **07.06.83 DE 3320505**

(43) Veröffentlichungstag der Anmeldung: **09.01.85**
**Patentblatt 85/2**

(84) Benannte Vertragsstaaten: **AT BE CH DE FR GB IT LI NL SE**

(71) Anmelder: **Grund, Klaus Joachim, Winkelweg 5, D-8071 Unterhaunstadt (DE)**

(72) Erfinder: **Grund, Klaus Joachim, Winkelweg 5, D-8071 Unterhaunstadt (DE)**

(74) Vertreter: **Sasse, Volker, Dipl.-Ing., Chiemgaustrasse 8a, D-8070 Ingolstadt/Do. (DE)**

(54) **Verfahren und Vorrichtung zum Reparieren von Schieberspindeln.**

(57) Die Erfindung betrifft ein Verfahren und eine Vorrichtung zum Reparieren einer beschädigten Schieberspindel eines in einem Schiebergehäuse geradlinig bewegbaren Schiebers, insbesondere bei einem Pipeline-Absperrschieber. Sie kennzeichnet sich dadurch aus, daß bei im Schiebergehäuse (5) belassenem Absperrschieber (7) der Gehäuseteil (19), der das beschädigte Spindelende (11) enthält, vom Schiebergehäuse (5) entfernt, danach das beschädigte Spindelende (11) abtrennt, dann an der Trennstelle der Schieberspindel (10) in einem Verbindungsbereich (27) ein neues und gegenüber dem abgetrennten, längeres Spindelende (11a) angefügt, der Verbindungsbereich (27) drehmoment- und zug- sowie druckkraftübertragend ausgebildet und schließlich ein mindestens der Länge des Verbindungsbereiches (27) entsprechender Gehäusezwischenteil (23) zwischen dem Gehäuseteil (19) und dem aufgesetzten Spindelantrieb (15) eingesetzt wird. Eine zum Durchführen des Verfahrens geeignete Vorrichtung weist einen Drehkranz (36) mit einer Hubsäule (42) auf, an denen Hebezeug (z.B. 50) für das Spindelende (11) sowie Bearbeitungswerkzeuge (z.B. 60) zum Herstellen des Verbindungsbereiches vorgesehen sind, der auf dem Schiebergehäuse (5) befestigbar ist.

Die Erfindung betrifft ein Verfahren der im Oberbegriff des Patentanspruchs 1 angegebenen Art, sowie eine zu seiner Durchführung geeignete Vorrichtung.

Bei spindelbetätigten Absperrschiebern kommt es häufig nach längerer Gebrauchsdauer zu Schäden an der Spindel, die ein ordnungsgemäßes Betätigen des Absperrschiebers verhindern. Im besonderen bei Öl-Pipelines, in deren Verlauf in regelmäßigen Abständen ein solcher Absperrschieber in einem Schiebergehäuse vorgesehen ist, zeigt sich, daß nach zehn oder mehr Jahren derartige Schäden an den Schieberspindeln gehäuft auftreten, durch welche die Sicherheitsfunktion des Absperrschiebers nicht mehr gegeben ist. Bisher mußte in einem solchen Fall eine Bypaßleitung zum Überbrücken des Schiebergehäuses gelegt und das Schiebergehäuse gegenüber den angeschlossenen Rohrenden der Pipeline abgedichtet werden oder die Leitung mittels $N_2$-Molchung entleert werden, bevor der Sperrschieber komplett ausgebaut werden konnte. Vom ausgebauten Sperrschieber wurde dann die Spindel demontiert und durch eine neue Schieberspindel ersetzt. Der Sperrschieber mit der neuen Schieberspindel wurde dann wieder in das Schiebergehäuse eingebaut und die Bypaßleitung wieder abgebaut. Die Vorarbeiten, die zum Auswechseln der Schieberspindel erforderlich sind, sind außerordentlich teuer und zeitaufwendig, zumal sie überwiegend im freien Gelände auszuführen sind. Es mußte ferner nicht nur der den Schieberantrieb tragende Gehäuseteil entfernt werden, sondern das Schiebergehäuse weitgehend zerlegt werden, so daß auch die Abdichtung zwischen dem Schiebergehäuse und dem Schieberantrieb zu erneuern war. Ferner ist jeweils der gesamte Förderbetrieb zu stoppen.

Der Erfindung liegt die Aufgabe zugrunde, ein Verfahren zu schaffen, mit dem eine beschädigte Schieberspindel ohne teuere und zeitaufwendige Vorarbeiten und ohne Betriebsstörung in der vom Schieber überwachten Rohrleitung repariert werden kann, sowie eine Vorrichtung anzugeben, mit der dieses Verfahren auch im freien Gelände einfach und kostengünstig durchführbar ist.

Die gestellte Aufgabe wird erfindungsgemäß durch die im kenn-

zeichnenden Teil des Patentanspruchs 1 angegebenen Verfahrensmaßnahmen gelöst.

Da bei diesem Verfahren der Schieber in einer seiner Betriebsstellungen bleiben kann, entfällt die Notwendigkeit, einer das Schiebergehäuse umgehenden Bypaßleitung und der Aufwand der damit verbundenen Arbeiten. Es ist ferner nicht erforderlich, das Schiebergehhäuse insgesamt zu zerlegen und eine neue Abdichtung zwischen dem
Schiebergehäuse und dem Schieberantrieb vorzusehen. Die Reparatur
ist in kurzer Zeit durchführbar. Wenn bei der in Durchgangsstellung stehendem Schieber gearbeitet wird, bleibt dieser Durchgang
ungehindert erhalten. Wenn hingegen in der Absperrstellung des
Schiebers gearbeitet wird, erfüllt dieser trotz der Reparaturarbeit
seine Absperrfunktion. Das Verfahren ist im besonderen zur Durchführung im freien Gelände und unter erschwerten Arbeitsbedingungen
geeignet. Es hat den Vorteil, insbesondere in explosionsgefährdeten
Zonen arbeiten zu können, ohne besondere Sicherheitsvorschriften
beachten zu müssen. Da nur der beschädigte Endteil der Schieberspindel ersetzt wird, braucht nicht für jeden Reparaturfall eine neue
und vollständige Schieberspindel angefertigt zu werden, sondern das
neue Schieberende kann von vorfabrizierten Gewindespindeln in der
jeweils benötigten Länge unmittelbar am Reparaturort abgeschnitten
werden. Die Kosten- und Zeitersparnis gegenüber dem bekannten Verfahren ist erheblich. Außerdem braucht der Förderbetrieb nicht eingestellt zu werden, so daß der Hauptbetrieb die Reparatur nicht
spürt.

Speziell bei Pipeline-Absperrschiebern hat sich in der Praxis eine
Variante des erfindungsgemäßen Verfahrens besonders bewährt, wie
sie aus Anspruch 2 hervorgeht. Ein derartiger Pipeline-Absperrschieber ist üblicherweise so ausgelegt, daß er in der angehobenen
Stellung den Durchgang freigibt, während er in der abgesenkten
Stellung den Durchgang blockiert. Da die Schieberspindel für die
Reparatur blockiert wird, läßt sich die Reparatur ohne weiteres auch
bei in der Durchgangsstellung befindlichem Absperrschieber durchführen, ohne daß in das Innere des abgedichteten Schiebergehäuses
eingegriffen zu werden braucht.

Dabei ist es zweckmäßig, wenn die Blockierung gemäß Anspruch 3 vorgenommen wird, denn zum einen stützt sich dann das Gewicht des Sperrschiebers und des verbleibenden Teils der Spindel am Schiebergehäuse ab, während zum anderen durch die Blockiervorrichtung das Eindringen von Verschmutzungen in den Bereich verhindert wird, indem die Schieberspindel im Schiebergehäuse abgedichtet ist.

Zur Durchführung des Verfahrens eignet sich insbesondere eine Vorrichtung, wie sie in Anspruch 4 erläutert ist. Diese Vorrichtung ist leicht zu transportieren und am Reparaturort auf dem Schiebergehäuse zu montieren und gestattet es nicht nur, das neue Spindelende in der jeweils gewünschten Position zu halten, sondern auch die Verbindung zwischen dem verbliebenen Spindelabschnitt und dem neuen Spindelende herzustellen, ohne daß dazu mehrere Arbeitskräfte oder zusätzliche Hilfseinrichtungen erforderlich wären. Anstelle der Verbindung mittels einer Kuppelhülse und Bolzen wäre es auch denkbar, die aneinanderstoßenden Enden miteinander zu verschweißen. Dies wäre aber nur möglich, wenn das zu führende Medium kein explosionsgefährdetes Mittel ist. Dann könnte in der Vorrichtung ohne weiteres eine Schweißeinrichtung baulich so integriert sein, z.B. eine Schutzgasschweißeinrichtung, daß der Schweißvorgang halb- oder vollautomatisch durchführbar ist, mit dem das neue Spindelende ordnungsgemäß befestigt wird. Eine Bohrvorrichtung wäre dann entbehrlich.

Zweckmäßig sind auch die in Anspruch 5 erläuterten Merkmale, damit die Vorrichtung einerseits fest mit dem Schiebergehäuse verbunden und trotzdem in die jeweils zum Arbeiten günstigste Drehlage gebracht werden kann, bzw. während der Reparaturarbeit in ihrer Drehlage veränderbar ist.

Damit auch bei unterschiedlich langen Schieberspindeln mit ein- und derselben Vorrichtung gearbeitet werden kann, ist auch das Merkmal von Anspruch 6 zweckmäßig. Zudem kann die Hubsäule für den Transport der Vorrichtung auf das kürzeste Maß eingefahren werden, was für den Transport in unwegsamem Gelände wichtig ist.

Ein weiterer, wichtiger Gedanke ist in Anspruch 7 enthalten. Mit diesen Justiervorrichtungen läßt sich das neue Spindelende in die gleiche Lage wie das abgetrennte Spindelende einjustieren, so daß das ordnungsgemäße Zusammenarbeiten mit dem Spindelantrieb nach der Reparatur gewährleistet ist.

Dabei hat es sich in der Praxis als vorteilhaft gezeigt, wenn die Justiervorrichtungen gemäß Anspruch 8 ausgebildet sind. Derartige Prismenlineale oder -ringe sind auch bei den bei solchen Reparaturarbeiten unvermeidbar groben Arbeitsbedingungen sehr genau und gegen Beschädigungen widerstandsfähig.

Wichtig ist auch das Merkmal von Anspruch 9, da es die wählbare Verdrehung aber auch die Feststellung der Hubsäule auf dem Drehkranz zuläßt.

Um bei der Reparatur die Bearbeitungsgeräte in gewünschter Lage zur Verfügung zu haben, sind die Merkmale des Anspruchs 10 wichtig. Das Anschaffen verlangt präzises Bearbeiten der Längenenden, das mit den genannten Mitteln erreichbar ist.

Schließlich ist auch das Merkmal von Anspruch 11 wesentlich, da es zu einem Halt für das neue Spindelende, das bei üblichen Spindeldurchmessern von annähernd 100 mm und einer Länge von z.B. annähernd 1 m ein erhebliches Gewicht darstellt, beiträgt, wobei durch die gelenkige Aufhängung des Klammergreifers das Einjustieren des neuen Spindelendes besonders leicht durchführbar ist.

Das erfindungsgemäße Verfahren und eine dafür nutzbare Vorrichtung wird beispielhaft nachstehend anhand der Zeichnungen erläu-

*tert.*

*Es zeigen:*

*Fig. 1*     *einen schematischen Längsschnitt durch einen Teil einer Pipeline mit einem Absperrschieber,*

*Fig. 2*     *eine um 90° gedrehte schematische Schnittdarstellung in der Ebene II-II von Fig. 1,*

*Fig. 3*     *einen schematischen und den von Fig. 1 entsprechenden Schnitt durch den Absperrschieber nach einer Reparatur,*

*Fig: 4*     *einen vergrößerten Detailschnitt zur Verdeutlichung der durchgeführten Reparatur und*

*Fig. 5*     *eine perspektivische Schemadarstellung einer auf das Schiebergehäuse aufgesetzten Vorrichtung bei der Reparatur.*

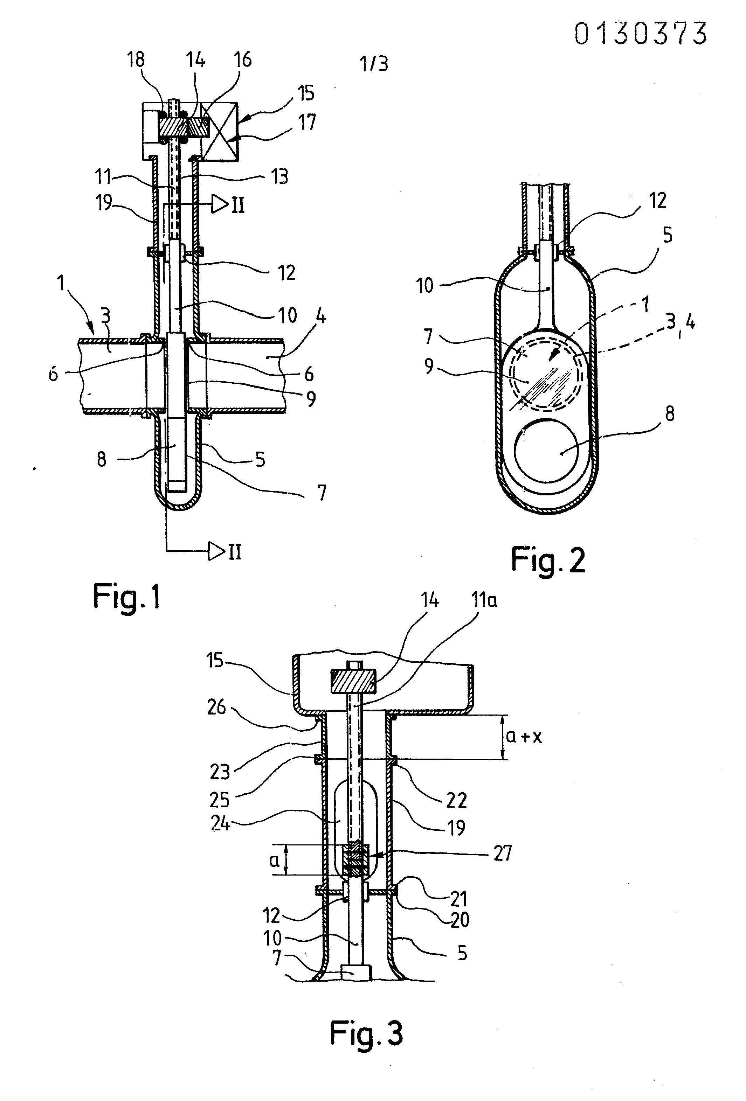

*In den Fig. 1 und 2 ist eine Pipeline 1 angedeutet, von der zwei Rohrabschnitte 3, 4 über ein Schiebergehäuse 5 miteinander so verbunden sind, daß die Strömung über das Schiebergehäuse 5 erfolgt. Im Schiebergehäuse 5 sind Anschlußstutzen 6 vorgesehen, die eine Blendenöffnung bieten, die mit einem Absperrschieber 7 verschlossen oder offengehalten werden kann, der im Schiebergehäuse 5 auf nicht näher dargestellte Weise auf und ab verschiebbar gelagert ist. Der Absperrschieber 7 und das Schiebergehäuse 5 sind so ausgelegt, daß in der abgesenkten Stellung (Fig. 1 und 2) der Schieber 7 mit seinem Absperrteil 9 die Strömung unterbricht. Im unteren Teil des Schiebers 7 ist eine Durchgangsöffnung 8 vorgesehen, die dann die Strömungsverbindung freigibt, wenn der Schieber 7 entsprechend weit angehoben wird.*

*Am Schieber 7 ist oben eine Schieberspindel 10 auf nicht näher dargestellte Weise befestigt, die in ihrem oberen und aus dem Schiebergehäuse 5 herausragenden Spindelende 11 mit einem Außengewinde 13 versehen ist. Auf dem Außengewinde 13 der Spindel 10 sitzt eine Mutter 14, die einem Spindelantrieb 15 angehört und über ein Getriebe 16 sowie einen Antrieb 17 in Drehung versetzbar ist, um den Schieber 7 anzuheben oder abzusenken. Die Mutter 14 ist beispiels-*

weise bei 18 drehbar aber unverschieblich gelagert. In dem Bereich, in dem die Spindel 10 aus dem Schiebergehäuse 5 austritt, ist eine stopfbuchsenartige Abdichtung 12 vorgesehen. Auf dem Schiebergehäuse 5 sitzt ein rohrartiger Gehäuseteil 19, auf dem oberseitig der Spindelantrieb 15 befestigt ist.

Wenn nach längerem Gebrauch das Außengewinde 13 der Spindel 10 so stark verschlissen ist, daß keine einwandfreie Schieberbetätigung mehr möglich ist, dann muß zumindest das Gewinde 13 der Schieberspindel 10 repariert werden.

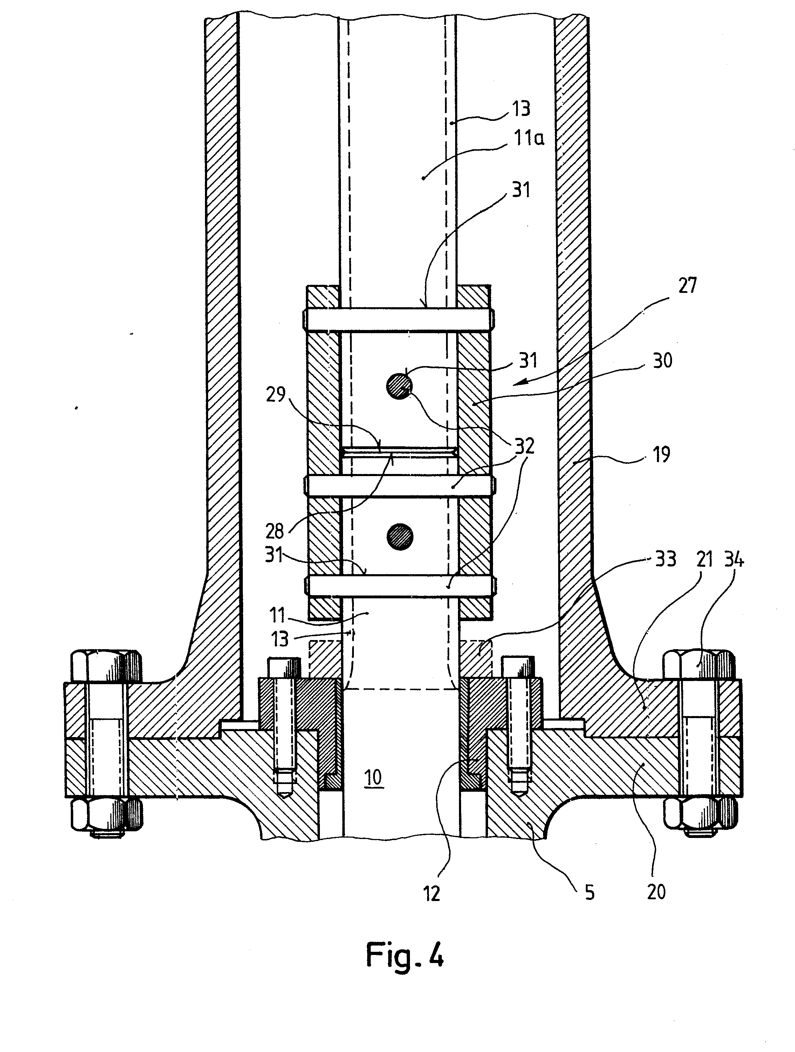

Fig. 3 und im besonderen Fig. 4 zeigen, wie die Schieberspindel 10 in einem solchen Fall repariert wurde. Dazu wurde das beschädigte Spindelende 11 nahe am Austrittsbereich des Schiebergehäuses 5 von der Spindel 10 abgetrennt und durch ein neues Spindelende 11a ersetzt, das in einem Verbindungsbereich 27 mit dem verbliebenen Teil der Spindel 10 drehmomentübertragend und zug- sowie druckkraftübertragend verbunden ist. Aus Fig. 3 ist ferner erkennbar, daß der Gehäuseteil 19 mit einem unteren Endflansch 21 auf einem oberen Endflansch 20 des Schiebergehäuses 5 aufsitzt. Ferner sitzt auf einem oberen Endflansch 22 des Gehäuseteils 19 ein Gehäusezwischenteil 23 von rohrförmiger Gestalt mit einem unteren Endflansch 25 auf, auf dessen oberen Endflansch 26 der Spindelantrieb 15 befestigt ist. Der Gehäusezwischenteil 23 hat eine bestimmte Länge a + x, die größer ist als die Länge a des Verbindungsbereiches 27, und zwar um sicherzustellen, daß beim möglichen Schieberhub keine Berührung zwischen dem Verbindungsbereich 27 und der Abdichtung 12 einerseits bzw. dem Spindelantrieb 15 andererseits stattfinden kann. Das Maß x beträgt dabei z.B. annähernd 10 mm. In Fig. 3 ist ferner erkennbar, daß in dem Gehäuseteil 19 wenigstens eine Zugriföffnung 24 ausgespart sein könnte, durch welche zur Schieberspindel 10 ein ungehinderter Zugriff möglich ist.

In Fig. 4 ist im Detail die Ausbildung des Verbindungsbereiches 27 erkennbar. Die Schieberspindel 10 befindet sich in dem Fall in der untersten Stellung, in der der Absperrschieber 7 den Durchgang absperrt. Es wäre natürlich auch möglich, die Schieberspindel 10 bei der Reparatur in der obersten oder einer anderen Stellung des Schiebers 7 zu halten, so daß während der Reparatur der Durchfluß in der Pipeline 1 nicht unterbrochen wird. Zu diesem Zweck ist bei der herausgezogenen Schieberspindel 10 um diese ein Blockierring 33 gespannt, der sich auf dem Schiebergehäuse 5 bzw. auf der Abdichtung 12, das auf dem Flansch 20 des Schiebergehäuses 5 befestigt ist, abzustützen vermag.

Im Verbindungsbereich 27 stößt die gekappte Schieberspindel 10 mit ihrem geschnittenen Ende 28 gegen ein Ende 29 des neuen Spindelendes 11a. Die beiden Enden 28, 29 werden von einer überfassenden Kuppelmuffe oder -hülse 30 zusammengehalten. Dabei kann die Kuppelhülse 30 mit einem Innengewinde versehen sein und auf den jeweiligen Außengewinden 13 der Spindelenden 11, 11a sitzen. Das Innengewinde der Kuppelhülse 30 ist aber in diesem Bereich so ausgelegt, daß ein gewisses Spiel zwischen den Gewindegängen vorhanden ist um Richtkorrekturen zuzulassen. Mit mehreren jeweils zueinander versetzten Bohrungen 31 und darin eingeschlagenen oder eingepreßten Bolzen 32 sind die Kuppelhülse 30 und die Spindelenden 11, 11a durchsetzt und erhalten damit eine feste und drehmomentsichere Verbindung. Mit 34 sind die Spannschrauben bezeichnet, mit denen die Flansche 21 und 20 gegeneinander gepreßt werden.

Bei der Reparatur wird folgendermaßen vorgegangen:

Zunächst wird der Schieber 7 in die jeweils gewünschte Stellung gebracht, d.h. entweder angehoben oder abgesenkt. Danach wird mit dem Blockierring 33 die Spindel 10 festgelegt. In weiterer Folge wird der Spindelantrieb 15 abmontiert, wobei nach Lösen der Verbindungsschrauben zweckmäßigerweise der gesamte Antrieb 17 mit der Mutter 14 vom Spindelende 11 abgeschraubt wird. Nachdem dies geschehen ist, werden die Spannschrauben 34 gelöst und auch der Gehäuseteil 19 entfernt. Das Anbringen des Klemmringes 33 erfolgte vorher durch die Zugriffsöffnungen 24 des Gehäuseteils 19.

Nachdem das beschädigte Spindelende 11 freigelegt ist, wird es in seiner Länge genau vermessen und auch der Schieberhub festgestellt, ehe eine Trennstelle festgelegt wird, an der nachfolgend das beschädigte Spindelende 11, z.B. durch Sägen, abgetrennt wird. Nachdem das gekappte Ende 28 gesäubert wurde, wird das neue Spindelende 11a einjustiert, so daß es genau mit dem verbleibenden Teil der Spindel 10 fluchtet. Zuvor kann bereits die Kuppelhülse 30 auf das gekappte Ende 28 des beschädigten Spindelendes aufgeschraubt werden, worauf dann auch das neue Spindelende 11a in die Kuppelhülse 30 eingeschraubt wird, bis die Enden 28, 29 aneinander liegen. Danach werden die Bohrungen 31 gebohrt und nachfolgend die Bolzen 32 eingeschlagen.

Alternativ dazu ist es auch möglich, das vorher korrekt abgelängte Spindelende 11a mit der Kuppelhülse 30 zu versehen und auch die entsprechenden Bohrungen 31 und Bolzen 32 im Spindelende 11 zu setzen. Dies kann ggfs. schon vorher und nicht erst am Reparaturort erfolgt sein. Bei einem derart vorbereitetem neuen Spindelende 11a brauchen dann nur mehr die Bohrungen 31 im verbleibenden Teil der Spindel 10 angebracht und die dort vorgesehenen Bolzen 32 gesetzt zu werden, was die Reparatur noch weiter vereinfacht.

Eine weitere Möglichkeit wäre, anstelle der Kuppelhülse und der Verbolzung eine Schweißverbindung vorzusehen.

Da die Kuppelhülse 30 im Verbindungsbereich 27 einen größeren Außendurchmesser als die Schieberspindel 10 selbst hat, würde sie bei der Arbeitsbewegung entweder am Lager 12 oder im Bereich des Spindelantriebes 15 anschlagen, wenn das Spindelende 11a gleich lang wäre wie das beschädigte, abgeschnittene Spindelende. Aus diesem Grunde ist das neue Spindelende 11a mindestens um das Maß a länger als das abgeschnittene Spindelende. Zudem ist es dann erforderlich, das in Fig. 3 gezeigte Gehäusezwischenteil 23 vorzusehen, damit die vorerwähnte Kollision zwischen der Kuppelhülse 30 und dem Spindelantrieb 15 vermieden wird. Aus Sicherheitsgründen ist deshalb der Gehäusezwischenteil 23 nicht nur um die Kuppelmuffe 30 mit dem Maß a länger, sondern um ein zusätzliches Maß x, so daß hier ein größerer Abstand von der unteren Abdichtung 12 bis zum oberen Spindelantrieb 15 geschaffen ist, so daß die Kuppelmuffe 30 nirgends anstößt. Im zusammengebauten Zustand liegt dann der Spindelantrieb 15 um das Maß a + x höher als zuvor. Dies spielt jedoch keine Rolle.

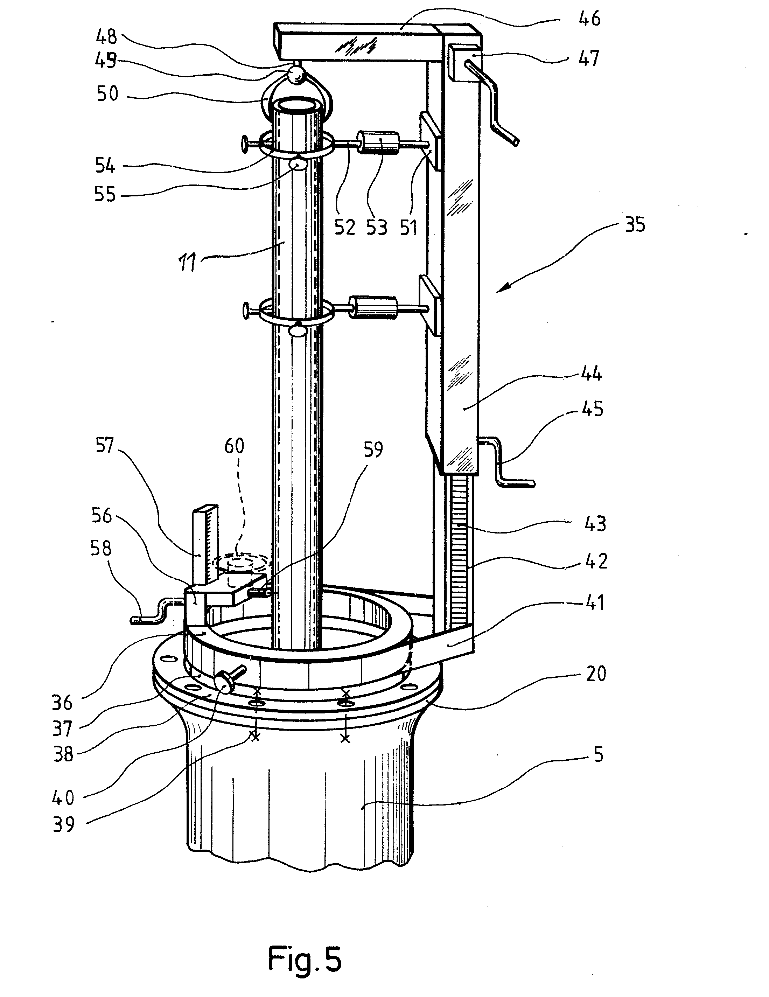

Aus Fig. 5 ist eine Vorrichtung 35 erkennbar, mit der die Reparatur auf besonders einfache Weise rasch durchführbar ist. Diese Vorrichtung 35 weist einen Drehkranz 36 auf, der auf einem Unterteil 37 mit einem Flansch 38 drehbeweglich gelagert ist, z.B. durch dazwischen angeordnete Rollen. Der Flansch 38 wird nach Abnahme des Gehäuseteils 19 auf dem oberen Flansch 20 des Schiebergehäuses 5 befestigt, z.B. mit Befestigungsschrauben 39. Am Drehkranz 36 ist eine Feststellvorrichtung 40 vorgesehen, mit der sich dieser in einer beliebigen Drehstellung relativ zum Schiebergehäuse 5 festsetzen läßt.

Am Drehkranz 36 ist ferner mit einem Ausleger 41 eine Hubsäule 42 befestigt, auf der ein Rohr 44 höhenverstellbar geführt wird. Beispielsweise trägt die Säule 42 eine Verzahnung 43, mit der über eine Kurbel 45 das Rohr 44 auf- und abverfahren werden kann.

Ein oberer Endteil 46 des Rohres 44 ist galgenartig ausgebildet und trägt eine Hebevorrichtung, die aus einem Hubseil 48 mit einem Klammergreifer 50 besteht, der mit dem Hubseil 48 über ein Drehgelenk 49 drehbeweglich und schwenkbar verbunden ist. Mit einer Betätigungsvorrichtung 47 kann der Klammergreifer 50 bewegt werden, obwohl eine Bewegung des Klammergreifers 50 in der Höhe auch mittels der Kurbel 45 möglich ist.

Am Rohr 44 sind in Lagern 51 Justiereinrichtungen verstellbar angebracht, die beispielsweise über Spindeln 52 mit Verstelleinrichtungen 53 und Prismenringe 54 mit weiteren Stellelementen 55 verfügen. Anstelle solcher Justiervorrichtungen könnten auch verstellbare Prismenlineale vorgesehen werden.

*Auf dem Drehkranz 36 ist ferner eine Werkzeugeinheit 56, vorzugsweise abnehmbar, festgelegt, die an einer Säule 57 des Drehkranzes
36 auf und ab verfahrbar, z.B. mittels eines Antriebs 58, gelagert
ist. Diese Werkzeugvorrichtung 56 enthält beispielsweise einen Bohrkopf 59 und eine strichliert angedeutete Trennscheibe oder Sägeeinrichtung 60. Diese Werkzeuge lassen sich auch in radialer Richtung
am Drehkranz 36 verstellen.*

*Die Vorrichtung 35 wird auf das Schiebergehäuse 5 aufgesetzt, nachdem der Schieberantrieb 15 und der Gehäuseteil 19 entfernt worden
sind. Danach wird das geschädigte Spindelende 11 mit dem Klammergreifer 50 ergriffen, ehe mit der Trennvorrichtung 60 an der vorher
bestimmten Trennstelle das beschädigte Spindelende 11 abgeschnitten wird. Mit dem Klammergreifer 50 kann das beschädigte Spindelende 11 angehoben werden, damit es leicht entfernbar ist.*

*Danach wird an den Klammergreifer 50 das neue Spindelende 11a
angehängt und so weit angehoben, bis es schließlich mit seinem
unteren Ende 29 auf dem oberen Ende 28 der gekappten Spindel 10
aufsitzt, wobei die Kuppelhülse 30 schon zuvor eingesetzt worden
ist. Danach werden die Bohrungen 31 angebracht und die Bolzen
32 eingesetzt. Das neue Spindelende 11 wurde zuvor mittels der Justiervorrichtungen 51 bis 54 genau einjustiert.*

*Danach wird die Vorrichtung 35 wieder abmontiert und erneut der
Gehäuseteil 19 aufmontiert. Der Spindelantrieb 15 wird danach unter
Zwischensetzen des Gehäusezwischenteiles 23 auf den Gehäuseteil 19
montiert, worauf der Absperrschieber 7 wieder voll funktionsfähig
ist. Diese Reparatur kann sowohl bei abgesenktem oder angehobenem
Schieber 7 durchgeführt werden, da ja der Klemmring 33 für die
Blockierung der Spindel 10 in der gewünschten Lage sorgt. Der allgemeine Betrieb muß wegen solch einer Reparatur nicht eingestellt
werden.*

PATENTANWALT

# DIPL.-ING. VOLKER SASSE

### EUROPEAN PATENT ATTORNEY

Chiemgaustraße 8a
D 8070 INGOLSTADT
Telefon 08 41 / 8 27 90

EP 0130373

*il*

26.05.1983
*Gr-1*
*S/M*

Patentanwalt Dipl.-Ing. V. Sasse, Chiemgaustraße 8 a, 8070 Ingolstadt

*Anmelder: Klaus Joachim Grund, Winkelweg 5, 8071 Unterhaunstadt*

*Verfahren und Vorrichtung zum Reparieren von Schieberspindeln*

## Patentansprüche

1. *Verfahren zum Reparieren einer beschädigten Schieberspindel eines in einem Schiebergehäuse geradlinig bewegbaren Schiebers, insbesondere eines Pipeline-Absperrschiebers, gekennzeichnet durch folgende Schritte:*

a) *Der Absperrschieber wird im Schiebergehäuse belassen und in die gewünschte Betriebsstellung geschoben und festgelegt und ein das beschädigte Spindelende enthaltender Gehäuseteil wird vom Schiebergehäuse entfernt,*

b) *das freie und beschädigte Spindelende wird abgetrennt,*

c) *an der Trennstelle der Schieberspindel wird in einem Verbindungsbereich ein neues, gegenüber dem abgetrennten, längeres Spindelende angefügt,*

d) *der Verbindungsbereich wird drehmoment- und zug- sowie druckkraftübertragend ausgebildet,*

Bankkonten: Deutsche Bank Ingolstadt 23 / 51 310 BLZ 721 700 07
Postscheckkonto München 225 940 - 800 BLZ 700 100 80

e) ein mindestens der Länge des Verbindungsbereiches entsprechender Gehäusezwischenteil wird zwischen das Schiebergehäuse und dem Gehäuseteil oder zwischen den Gehäuseteil und einem Schieberantrieb eingesetzt.

2. Verfahren nach Anspruch 1, _gekennzeichnet durch_ folgende Schritte:

a) Der Schieber wird mit dem Schieberantrieb in seine Durchgangsstellung bewegt,

b) die Schieberspindel wird bei in der Durchgangsstellung befindlichem Schieber blockiert,

c) der Gehäuseteil und der Schieberantrieb werden entfernt,

d) das beschädigte Spindelende wird in einer Länge abgetrennt, die mindestens dem gesamten Hubweg des Schiebers zwischen seinen Betriebsstellungen entspricht,

e) über die aneinanderstoßenden Enden des abgelängten Spindelteils und des neuen Spindelendes wird eine Kuppelhülse geschoben,

f) das neue Spindelende wird dabei abgestützt und koaxial zum verbleibendem Spindelteil einjustiert,

g) die Kuppelhülse und die aneinanderstoßenden Enden werden gemeinsam verbohrt und verbolzt und

h) der Gehäuseteil mit dem Schieberantrieb und dem Gehäusezwischenteil werden aufmontiert.

3. Verfahren nach Anspruch 2, _dadurch gekennzeichnet,_ daß zum Blockieren der Spindel eine Klemmvorrichtung, vorzugsweise ein Klemmring (33), in dem Abschnitt an der Spindel (10) lösbar angebracht wird, an dem diese aus dem Schiebergehäuse (5) austritt.

4. Vorrichtung zum Durchführen des Verfahrens nach wenigstens einem der Ansprüche 1 bis 3, dadurch gekennzeichnet, daß auf einem Drehkranz (36), der auf dem Schiebergehäuse (5) aufsetzbar ist, eine Halte- und Hebevorrichtung (35) für die Schieberspindel (10) vorgesehen ist, und ferner Bearbeitungswerkzeuge (56) wie Trenn- (60) und Bohrvorrichtungen (59) verfahrbar befestigt sind.

5. Vorrichtung nach Anspruch 4, dadurch gekennzeichnet, daß der Drehkranz (36) auf einem Befestigungsflansch (38) verdrehbar gelagert und in wählbaren Drehlagen daran feststellbar ist.

6. Vorrichtung nach den Ansprüchen 4 und 5, dadurch gekennzeichnet, daß die Halte- und Hebevorrichtung (35) von einer längenveränderbaren, vorzugsweise teleskopartigen Hubsäule (44, 42) mit einem Klammergreifer (50) gebildet ist.

7. Vorrichtung nach wenigstens einem der Ansprüche 4 bis 6, dadurch gekennzeichnet, daß an der Hubsäule (42, 44) Justiervorrichtungen (53, 55) für die Spindel (11) verstellbar angeordnet sind.

8. Vorrichtung nach Anspruch 7, dadurch gekennzeichnet, daß die Justiervorrichtungen von verstellbaren Prismenlinealen oder -ringen (54) gebildet sind.

9. Vorrichtung nach Anspruch 5, dadurch gekennzeichnet, daß am Drehkranz (36) wenigstens eine Feststellvorrichtung (40) vorgesehen ist.

10. Vorrichtung nach wenigstens einem der Ansprüche 4 bis 9, dadurch gekennzeichnet, daß am Drehkranz (36) Bearbeitungsgeräte wie eine Säge- oder Trennvorrichtung (56, 60), eine Bohrvorrichtung und dgl. höhen- und radial verstellbar, vorzugsweise abnehmbar, befestigt sind.

11. Vorrichtung nach wenigstens einem der Ansprüche 4 bis 13, _dadurch gekennzeichnet,_ daß die Hubsäule (44) einen galgenartigen Endteil (46) besitzt, von dem ein Klammergreifer (50) in etwa mittig über dem Zentrum des Drehkranzes hängt, der zum Halten und Heben des Spindelendes (11, 11a) dient, und daß der Klammergreifer (50) schwenk- und drehbeweglich mit einem Hubseil (48) zum Endteil (46) verbunden ist.

Fig.1

Fig. 2

Fig. 3

Fig. 4

0130373

Fig. 5